# EUROPEAN PATENT SPECIFICATION

(11) **EP 2 856 705 B1**
(45) Date of publication and mention of the grant of the patent: **07.09.2016**
(21) Application number: 13734357.0
(22) Date of filing: 20.06.2013
(51) Int. Cl.: H04L 12/40, H04L 12/24, H04L 12/12, H04L 12/931, H04L 12/935

(54) **NETWORK SWITCH AND METHOD OF OPERATING A COMMUNICATION NETWORK**
NETZWERKSCHALTER UND VERFAHREN ZUM BETRIEB EINES KOMMUNIKATIONSNETZWERKS
COMMUTATEUR RÉSEAU ET PROCÉDÉ D'EXPLOITATION D'UN RÉSEAU DE TÉLÉCOMMUNICATION

(30) Priority: 01.08.2012 EP 12178866
(43) Date of publication of application: 08.04.2015
(73) Proprietor: Siemens Aktiengesellschaft, 80333 München (DE)
(72) Inventor: KRISTIANSEN, Karstein, N-7051 Trondheim (NO)
(86) International application number: PCT/EP2013/062840
(87) International publication number: WO 2014/019764

(56) References cited:
- WO-A2-2006/127915
- DE-A1-102008 035 544
- US-A1- 2008 175 159

## Description

### Field of invention

The present invention relates to a network switch and to a method of operating a communication network, wherein at least one port of the network switch is disable, in order to allow a disconnection of a communication device coupled to the communication switch in a subsea application.

### Background

A network switch is known as a computer networking device that connects network segments or network devices with each other. The network switch may also be referred to a multiport network bridge that processes and routes data at the data link layer (layer 2) of the OSI model (open systems interconnection model). The switch is telecommunication device which receives a message from any device connected to it and then transmits the message only to that device for which the message was meant. This makes the network switch a more intelligent device than a simple hub (which receives a message and then transmits it to all the other devices of the network).

An Ethernet switch may operate at the data link layer of the OSI model to create a separate collision domain for each switch port. For example with four computers (e.g. A, B, C, and D) on a switch having four switch ports, A and B can transfer data back and fourth, while C and D also do so simultaneously and the two conversations will not interfere with one another.

US2008175159 A1 discloses an isolation toggle switch for RJ-45 ports, whereas the ports can be selectively opened/closed via a control signal. DE102008035544 A1 discloses a Power over Ethernet, PoE, midspan adapter in a patch-cable, operative to receive on one port Ethernet data signal and DC power, and to on/off switch the output PoE DC power to a powered Device, PD, based on received ethernet management LAN commands.

For subsea applications, such as oil/gas explorations setting-up a communication network may be required in order to appropriately control different devices, such as pumps, measuring devices, etc. at the sea ground. Thereby, in particular a Profinet/Ethernet switch may be used in subsea installations.

However, it has been observed that it is difficult to administrate or to modify the communication network which is located at the sea ground, such as in a depth of between 1000 m and 4000 m below sea level.

There may be a need for a network switch and a method of operating a communication network, wherein administration of the communication network and/or modification of the communication network is facilitated. Further, there may be a need for a network switch and a method of operating in a communication network which is robust and is operable under harsh conditions, such as in sea water.

### Summary

This need may be met by the subject matter according to the independent claims. Advantageous embodiments of the present invention are described by the dependent claims.

According to an embodiment of the present invention it is provided a network switch, comprising plural communication ports, each port having a first electrical output terminal and a second electrical output terminal for providing an electrical output signal between the first electrical output terminal and the second electrical output terminal, wherein the network switch is adapted to electrically switch off the electrical output signal of at least one communication port of the plural communication ports.

The network switch may for example have one to one hundred ports, in particular between ten and fifty ports, further in particular between twenty and thirty ports. Each port may be formed or configured as a socket or a plug, e.g. RJ45 compliable, in case of an Ethernet network switch. In the socket a respective plug connected to a communication cable may be inserted. The communication cable may be connected to a respective communication device, which may require to exchanging data with other communication devices connected to the same network switch or connected to other network switches via the network switch.

The electrical output signal may be an electrical voltage between the first electrical output terminal and the second electrical output terminal. The communication protocol for input and/or output may be according to TCP/IP. Thereby, packages of data may be sent as input signal or output signal. The output signal may be represented by a particular pattern of voltage peaks or voltage levels.

The protocol may be according to the Ethernet protocol, to the RS485 protocol to the RS422 protocol or to the RS232 protocol. All these different protocols may have different voltage levels between the first electrical output terminal and the second electrical output terminal in order to represent logical true or false values. For example, the voltage between the first electrical output terminal and the second electrical output terminal may be between -2.5 Volt to +2.5 Volt for the Ethernet protocol to represent logical true and false, respectively. In particular, the output signal may be a differential signal or may not be a non-differential signal. In a differential output signal the output signal is represented by a difference of voltages between the first electrical output terminal and the second electrical output terminal.

By electrical switching off the electrical output signal of at least one communication port of the plural communication ports it is enabled to use the network switch for a subsea application and use also the network switch when the communication network is to be modified. In case of modifying the communication network a previous communication device may for example be required to be replaced by a new communication device. In this case the respective port to which the previous communication device is connected may be electrically switched off such that no voltage is present at the first electrical output terminal and the second electrical output terminal. Thereby, when the respective plug of the previous communication device is unplugged from the port (in particular socket), the electrical connection pins are exposed to seawater containing electrolytes, such as salt. Thereby, in a conventional system having a voltage between the respective output pins, a corrosion and damage of the pins may occur resulting from an electrical current via the electrolyte solution between different pins or terminals. According to the present invention, however, no voltage is present between the first electrical output terminal and the second electrical output terminal and electrical current does not flow between these output terminals. Thereby, damage of the electrical pins or output terminal is avoided.

In particular, an old unit (i.e. previous communication device) may be required to be replaced (one by one) after a time span of several years, until a complete upgrade of all units is achieved. While replacing one of the old units, the other existing units may be required to continue operation and thus continue communication via the network switch with other units or communication devices. This is enabled according to embodiments of the present invention, since the network switch may stay generally in operation such as that communication of data via the other ports of the network switch (i.e. these ports at which the respective output signals are not switched off) are still operating and are thus providing communication capabilities.

In a conventional system the entire network switch has to be shut down in order to replace just one communication device connected to only one of the ports of the network switch.

Thereby, communication between other communication devices also connected to the network switch was not possible and a long shutdown was observed and a cumbersome start-up procedure and time was required for the subsea system to resume operation.

By this embodiment of the present invention a communication network may be operated more efficiently and the operation of communicating data between a large number of communication devices may continue, even if a single communication device also connected to the network switch has to be replaced.

A network switch according to embodiments of the present invention may operate at one or more layers of the OSI model, including data link and network. The network switch may also be or comprise a multilayer switch, wherein in this case the network switch operates simultaneously at more one of the layers of the OSI model.

The network switch may be differently configured depending on what type of network it is used for or which communication devices are interconnected. When a communication network has been setup, the network switch may learn the topology of the network including the knowledge which network device is connected to which port, in particular considering the MAC address of each connected communication device. When the network switch receives a message, the network switch may first verify each message or each received frame before forwarding it. In particular, the network switch may read the message at least or only up to the frames hardware address (MAC address) before starting to forward it. The network switch may perform a cut through.

The network switch may also be an adaptive network switch which automatically selects between different modes of operation, such as "store and forward", "cut through" and "fragment free".

The network switch may operate on the layer 2, on the layer 3, on the layer 4 or any other layer of the OSI model.

In particular, the network switch according to embodiments of the present invention may also be referred to or may be called a managed network switch, which may allow to modify the manner of operation of the network switch. The network switch may be managed using a command-line interface (CLI), e.g. accessed via a serial console, tended or secure shell, an embedded simple network management protocol (SNMP) agent allowing management from a remote console or management station or a web interface for management from a web browser.

According to an embodiment of the present invention the first electrical output terminal of the at least one communication port has a same electrical potential as the second electrical output terminal of the at least one communication port, when the electrical output signal of the at least one communication port is switched off.

In particular, a voltage between the first electrical output terminal and the second electrical output terminal may be zero volt, when the electrical output signal has been switched off. Thereby, no damage (due to current flow between the terminals across a conductive medium such as sea water) may occur at the electrical terminals which may be exposed to sea water when a respective plug has been removed from the port which has been switched off.

According to an embodiment of the present invention the electrical potential of the first electrical output terminal and the second electrical output terminal is the ground potential or earth potential. Thus, the first electrical output terminal and the second electrical output terminal has the same electrical potential as the earth.

Thereby, also no electric current may flow between either one of the first or the second electrical output terminal and the earth. Thereby, further damage of the output terminals may be avoided. Further, damage of the network switch itself may be avoided.

According to an embodiment of the present invention the network switch further comprises a first semiconductor switch (such as a transistor) arranged to switch off the electrical output signal. Thereby, the configuration of the network switch may be simplified and commercially available components may be used to realize the network switch, in particular to realize switching off the electrical output signal.

According to an embodiment of the present invention the network switch further comprises a primary coil connectable to a first internal output terminal and a second internal output terminal; a secondary coil connected to the first output terminal and the second output terminal, wherein the primary coil is connected to the first internal output terminal and the second internal output terminal, when the electrical output signal is enabled.

The primary coil and the secondary coil may be inductively coupled to each other such that a voltage signal or a current flowing in the primary coil may induce a voltage in the secondary coil. Thereby, a signal applied to the primary coil may be transferred to the first output terminal and the second output terminal without having a Galvanic connection between the first internal output terminal and the first output terminal on one hand and between the second internal output terminal and the second output terminal on the other hand. Thereby, a galvanic separation between the output terminal and the internal output terminals may be achieved in order to ensure a safe operation of the network switch.

Further, the primary coil and the secondary coil may in fact form a transformer which may allow to adjust an voltage output level at the first output terminal and the second output term as desired. Thereby, a high flexibility of adapting the output signal may be achieved.

According to an embodiment of the present invention, when the electrical output signal is switched off, the first semiconductor switch electrically connects, in particular via a resistor, the first internal output terminal to the second internal output terminal such that no electrical current flows in the primary coil.

The resistor may also be referred to a terminating resistor in order to appropriately terminate the first internal output terminal and the second internal output terminal by short cutting them via the terminating resistor. Thereby, damage of the network switch may be avoided and a safe operation and reliable operation may be ensured.

According to an embodiment of the present invention the network switch further comprises a second semiconductor switch, and a resistor between the first semiconductor switch and the second semiconductor switch, wherein when the electrical output signal is switched off: the first semiconductor switch connects a first terminal of the resistor to the first internal output terminal and in particular disconnects a first terminal of the primary coil from the first internal output terminal, and the second semiconductor switch connects a second terminal of the resistor to the second internal output terminal and in particular disconnects a second terminal of the primary coil from the second internal output terminal.

Also the second semiconductor switch may be for example a transistor. The first semiconductor switch and also the second semiconductor switch may be controlled via application of respective control signals at respective gates of the first and second semiconductor switches. In particular, a conductance state of the semiconductor switches may thereby be adjusted or changed.

The first semiconductor switch as well as the second semiconductor switch may provide a "single pole double throw" function which allows to either connect the first internal output terminal to the first terminal of the resistor or to a first terminal of the primary coil and which allows to either connect the second internal output terminal to the second terminal of the resistor or to a second terminal of the primary coil.

Alternatively, the first semiconductor switch and the second semiconductor switch may simply connect or disconnect the first terminal/second terminal of the resistor to the first internal output signal/the second internal output signal. Thereby, the first terminal of the primary coil may remain connected to the first internal output terminal and also the second terminal of the primary coil may maintain or stay connected to the second internal output terminal.

Thereby, a simple construction may be achieved which may ensure a reliable operation.

According to an embodiment of the present invention the network switch further comprises a controller configured to control switching off the electrical output signal, in particular based on a received control signal.

The controller may also be referred to as a processing unit which may be accessible by a user interface, such as a command line or graphical user interface. In particular, the network switch may be controlled from a location above sea level. The received control signal may indicate which of the ports of the network switch are to be switched off. Thereby, the network switch may be remote controlled without requiring a technician to configure the network switch at the sea ground.

According to an embodiment of the present invention the controller is configured to control a conductance state of the first semiconductor switch or a conductance state of both, the first semiconductor switch and the second semiconductor switch.

In particular, the processor may send respective control signals to respective gates of the first semiconductor switch and the second semiconductor switch to adjust the conductance states of the semiconductor switches.

Thereby, the configuration of the network switch may be simplified and also the control may be simplified.

According to an embodiment of the present invention each port has a first electrical input terminal and a second electrical input terminal for receiving an electrical input signal between the first electrical input terminal and the second electrical input terminal, wherein the port is in particular configured to selectively remove an electrical voltage between the first electrical input terminal and the second electrical input terminal.

In particular, the pair of the first electrical output terminal and the second electrical output terminal my also be referred to as "TX" for transmission and the pair of the first electrical input terminal and the second electrical input terminal may also be referred to as "RX" for receiving. In particular, the TX-pair of terminals and the RX-pair of terminals may be configured as a socket or a plug. Thus, these four terminals may be housed in a housing of a socket, such as an Ethernet socket, in order to establish or allow a RJ45 connection.

Thereby, each port of the network switch is also configured to receive an input terminal to the respective communication device coupled to the respective port. Thereby, a complete communication, i.e. transmitting and receiving of messages to the communication device connected to the port may be enabled.

However, at the first electrical input terminal and the second electrical input terminal no electrical voltage may be applied during normal operation so that switching off the first electrical input terminal and the second electrical input terminal may not be required when unplugging the plug from the port (in case the connected communication device requires replacement).

According to an embodiment of the present invention the method switch is configured as an Ethernet switch or a Profinet, wherein the ports are in particular adapted as sockets, such as RJ45 sockets.

PROFINET is the open industrial Ethernet standard of PROFIBUS & PROFINET International (PI) for automation. PROFINET uses TCP/IP and IT standards, and is, in effect, real-time Ethernet. The PROFINET concept features a modular structure so that users can select the cascading functions themselves. They differ essentially because of the type of data exchange to fulfil the partly very high requirements of speed.
In conjunction with PROFINET, the two perspectives PROFINET CBA and PROFINET IO exist. PROFINET CBA is suitable for the component-based communication via TCP/IP and PROFINET IO used for the real-time communication with real-time requirements in modular systems engineering. Both communication options can be used in parallel. PROFINET IO was developed for real time (RT) and isochronous real time (IRT) communication with the decentral periphery. The designations RT and IRT merely describe the real-time properties for the communication within PROFINET IO.

Profinet is a new and emerging standard that will be included instead of, or in conjunction with existing profibus equipped systems in the future. The bandwidth is broader, the communication protocol is more robust. The link layer and the physical layer of profinet based equipment are based on standard Ethernet equipment.

Thereby, standard communication connection cables and plugs may be utilized to connect respective communication devices to the network switch.

According to an embodiment of the present invention the network switch is configured for a subsea application. In particular, an appropriate sealing of the network switch may be provided, in order to avoid that sea water penetrates through a sealed housing of the network switch into the interior of the network switch which would otherwise damage the network switch. Further, the socket or plug of each port may have features for sealing when a respective plug or socket is connected to it in order to avoid penetration of sea water into the network switch or to the terminals of each port.

According to a further embodiment, a subsea network system is provided, which comprises a network switch according to any of the above mentioned embodiments, the network switch being configured as a subsea network switch. The subsea network system further comprises a subsea network node, which may for example be a subsea device having a network card for e.g. Ethernet or Profinet communication. The subsea network node is connected to one of the at least one switchable communication port of the subsea network switch. The subsea network switch is configured to be controllable to switch off the electrical output signal of the communication port to which the subsea network node is connected to enable the disconnection of the subsea network node even of both the subsea network switch and the subsea network node are installed subsea.

It should be understand that features individually or in any combination disclosed, described, mentioned or explained in the context of a network switch according to an embodiment of the present invention may also be used or applied or employed for a method of operating a communication network according to an embodiment of the present invention and vice versa.

According to an embodiment of the present invention it is provided a method of operating a communication network, in particular in sea water between 1000 m and 4000 m below sea level, the method comprising: using a network switch having plural communication ports, each port having a first electrical output terminal and a second electrical output terminal for providing an electrical output signal between the first electrical output terminal and the second electrical output terminal, electrically switching off, by the network switch, the electrical output signal of at least one communication port of the plural communication ports.

The method allows to continue operation of the network switch regarding other ports which are not switched off so that communication between other communication devices connected to the other port may continue. In particular, the network switch is not required to be completely switched off such that communication to or from other ports or all ports of the network switch are disabled. Instead, communication between other communication devices connected to the other ports not disabled continue without being impaired by switching off the particular port at which a communication device is connected which has to be replaced.

According to an embodiment of the present invention it is provided a method of replacing a first communication device connected to a port of a network switch with a second communication device, the method comprising: performing a method of operating a communication network according to an embodiment as described above; disconnecting the first communication device from the port at which the output signal has been switched off; exposing the port to sea water; connecting the second communication device to the port; and enabling the output signal at the port.

The invention is now described with reference to the accompanying drawings. The invention is not restricted to the illustrated or described embodiments.

### Brief Description of the Drawings

- Fig. 1: schematically illustrates a network switch according to an embodiment of the present invention in a normal operation mode; and
- Fig. 2: illustrates the network switch illustrated in Fig. 1 in the muted operation mode, wherein one port is switched off.

### Detailed Description of Embodiments

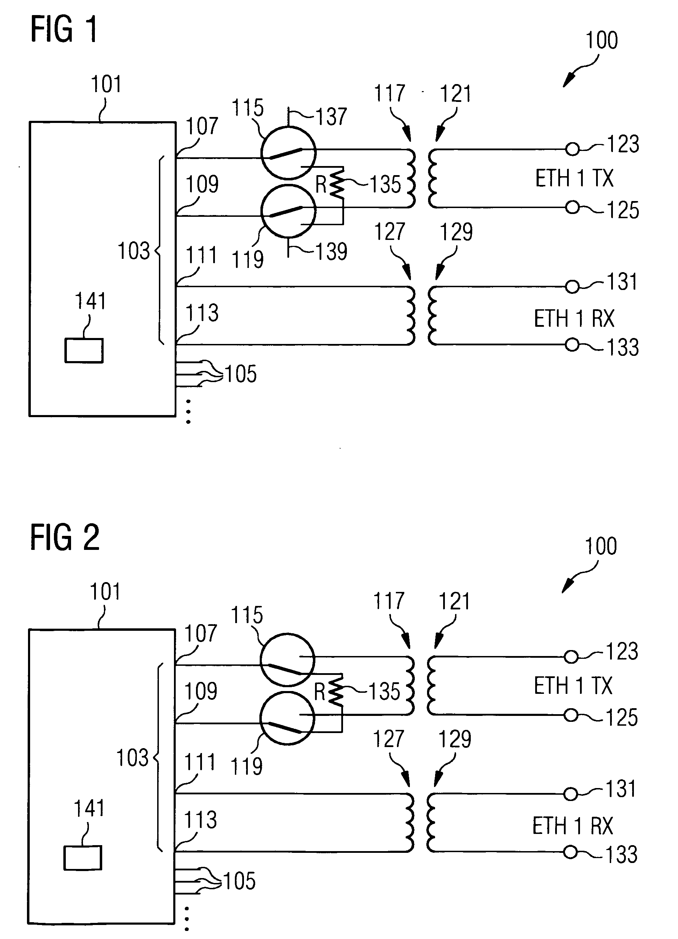

Figure 1 schematically illustrates a network switch 100 according to an embodiment of the present invention in a normal operation mode. The network switch 100 comprises a housing 101 containing a controller 141, where at the housing 101 a number of ports 103 and 105 are provided.

Thereby, the ports 105 are only schematically illustrated, while the port 103 is illustrated in more detail, albeit schematically. The ports 105 may be configured in a same or in a similar manner as the port 103. In particular, the port 103 comprises a first internal output terminal 107, a second internal output terminal 109, a first internal input terminal 111 and a second internal input terminal 113. Via a first semiconductor switch 115 the first internal output terminal 107 is connected to a terminal of a primary coil 117 and via a second semiconductor switch 119 the second internal output terminal 109 is connected to another of the primary coil 117, when the port 103 is in a normal operation mode, i.e. enabled.

The primary coil 117 is inductively coupled to a secondary coil 121, wherein the secondary coil 121 is connected to a first electrical output terminal 123 and a second electrical output terminal 125. The pair of electrical output terminals 123, 125 is also labelled in Figure 1 as ETH 1 TX indicating the transmission output terminals of Ethernet port 1 of the network switch 100. The port 103 further comprises another primary coil 127 to which the internal input terminal 101 and the internal input terminal 113 are connected. The other primary coil 127 is inductively coupled to another secondary coil 129 which is connected to a first electrical input terminal 131 and a second electrical input 133. The pair of electrical input terminals 131, 133 is also labelled in Figure 1 as ETH 1 RX indicating the input terminals of the Ethernet port 1 of the network switch 100.

The other ports 105 may be similarly configured as the port 103.

The network switch further comprises a resistor 135 which may be selectively connected to the first internal output terminal 107 and the second internal output terminal 109, when the port 103 is required to be switched off (i.e. the output signal is switched off), as illustrated in Figure 2 in a schematic manner. The first semiconductor switch 115 receives thereby (from the controller 141) at a gate terminal 137 a control signal and also the second semiconductor switch 119 receives (from the controller 141) at a gate terminal 139 a control signal which causes the semiconductor switches 115, 119 to connect the resistor 135 to the first internal output terminal 107 and the second internal output terminal 109, wherein this state is illustrated in Figure 2.

Thereby, when the port 103 is switched off, an electrical output signal which may be present at the first internal output terminal 107 and the second internal output terminal 109 may not be transferred to the first electrical output terminal 123 and the second electrical output terminal 125. Thus, a voltage between the first electrical output terminal 123 and the second electrical output terminal 125 is zero, in the state illustrated in Figure 2, illustrating the situation, when an output signal between the first electrical output terminal and the second electrical output terminal is switched off by the operation of the semiconductor switches 115, 119. These semiconductor switches 115, 119 connect thereby the terminating resistor 135 to the first internal output terminal 105 and the second internal output terminal 109.

The proposed network switch 100 enables to change/replace one communication device which is connected to the port 103 for example or any other port 105 of the network switch with a new communication device without disabling or shutting down the whole network switch 100. Thereby, other communication devices remain connected to the network switch and continue exchanging data to other network devices or communication devices also connected to the network switch 100. Thereby, flexibility and reliability of the whole subsea system may be increased.

Embodiments of the invention ensure for subsea applications that it is absolutely no voltage on the pins of the network switch exposed to seawater, because that would destroy the connectors. Therefore, the network switch provides an "electrically muted output" not only a "muted output".

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Network switch (100), comprising:
plural communication ports (103, 105), each port having a first electrical output terminal (123) and a second electrical output terminal (125) for providing an electrical output signal between the first electrical output terminal and the second electrical output terminal,
wherein the network switch is adapted to electrically switch off the electrical output signal of at least one communication port (103) of the plural communication ports, **characterized in that** the network switch is adapted such that the first electrical output terminal (123) of the at least one communication port has a same electrical potential as the second electrical output terminal (125) of the at least one communication port, when the electrical output signal of the at least one communication port (103) is switched off.

2. Network switch according to claim 1, wherein the electrical potential is a ground potential.

3. Network switch according to one of the preceding claims, further comprising:
a first semiconductor switch (115) arranged to switch off the electrical output signal.

4. Network switch according to the preceding claim, further comprising:
a primary coil (117) connectable to a first internal output terminal (107) and a second internal output terminal (109);
a secondary coil (121) connected to the first output terminal (123) and the second output terminal (125),
wherein the primary coil (117) is connected to the first internal output terminal (107) and the second internal output terminal (109), when the electrical output signal is enabled.

5. Network switch according to the preceding claim, wherein when the electrical output signal is switched off,
the first semiconductor switch (107) electrically connects, in particular via a resistor (135), the first internal output terminal (107) and the second internal output terminal (109) such that no electrical current flows in the primary coil (117).

6. Network switch according to one of claims 4 or 5, further comprising:
a second semiconductor switch (119), and
a resistor (135) between the first semiconductor switch (115) and the second semiconductor switch (119),
wherein when the electrical output signal is switched off: the first semiconductor switch (115)
connects a first terminal of the resistor (135) to the first internal output terminal (107) and
in particular disconnects a first terminal of the primary coil (117) from the first internal output terminal (107), and
the second semiconductor switch (119)
connects a second terminal of the resistor (135) to the second internal output terminal (109) and
in particular disconnects a second terminal of the primary coil (117) from the second internal output terminal (109).

7. Network switch according to one of the preceding claims, further comprising:
a controller (141) configured to control (137, 139) switching off the electrical output signal, in particular based on a received control signal.

8. Network switch according to the preceding claim when referred back to one of claims 3 to 6, wherein the controller is configured to control
a conductance state of the first semiconductor switch (115) or
a conductance state of the first semiconductor switch (115) and the second semiconductor switch (119).

9. Network switch according to one of the preceding claims, wherein each port (103, 105) has a first electrical input terminal (131) and a second electrical input terminal (133) for receiving an electrical input signal between the first electrical input terminal and the second electrical input terminal,
wherein the port (103, 105) is in particular configured to selectively remove an electrical voltage between the first electrical input terminal and the second electrical input terminal.

10. Network switch according to one of the preceding claims, configured as an Ethernet switch or a Profinet switch, wherein the ports are in particular adapted as sockets.

11. Network switch according to one of the preceding claims, configured for a subsea application.

12. Subsea network system, comprising a network switch according to any of the preceding claims configured as a subsea network switch and further comprising a subsea network node, the subsea network node being connected to one of the at least one switchable communication port (103) of the subsea network switch, the subsea network switch being controllable to switch off the electrical output signal of the connected communication port to enable the disconnection of the subsea network node even if both the subsea network switch and the subsea network node are installed subsea.

13. Method of operating a communication network, in particular in sea water between 1000 m and 4000 m below sea level, the method comprising:
using a network switch (100) having plural communication ports (103, 105), each port having a first electrical output terminal (123) and a second electrical output terminal (125) for providing an electrical output signal between the first electrical output terminal and the second electrical output terminal,
electrically switching off, by the network switch, the electrical output signal of at least one communication port (103) of the plural communication ports (103, 105),
**characterized in that** the network switch is adapted such that the first electrical output terminal (123) of the at least one communication port has a same electrical potential as the second electrical output terminal (125) of the at least one communication port, when the electrical output signal of the at least one communication port (103) is switched off.

14. Method of replacing a first communication device connected to a port of a network switch with a second communication device, the method comprising:
performing a method of operating a communication network according to the preceding claim 13;
disconnecting the first communication device from the port at which the output signal has been switched off;
exposing the port to sea water;
connecting the second communication device to the port; and
enabling the output signal at the port.

## Patentansprüche

1. Netzwerk-Switch (100), der Folgendes umfasst:
mehrere Kommunikationsports (103, 105), von denen jeder einen ersten elektrischen Ausgangsanschluss (123) und einen zweiten elektrischen Ausgangsanschluss (125) zum Bereitstellen eines elektrischen Ausgangssignals zwischen dem ersten und dem zweiten elektrischen Ausgangsanschluss aufweist,
wobei der Netzwerk-Switch so ausgelegt ist, dass er das elektrische Ausgangssignal mindestens eines Kommunikationsports (103) der mehreren Kommunikationsports elektrisch abschaltet,
**dadurch gekennzeichnet, dass** der Netzwerk-Switch so ausgelegt ist, dass der erste elektrische Ausgangsanschluss (123) des mindestens einen Kommunikationsports das gleiche elektrische Potential aufweist wie der zweite elektrische
Ausgangsanschluss (125) des mindestens einen Kommunikationsports, wenn das elektrische Ausgangssignal des mindestens einen Kommunikationsports (103) abgeschaltet ist.

2. Netzwerk-Switch nach Anspruch 1, bei dem es sich bei dem elektrischen Potential um ein Massepotential handelt.

3. Netzwerk-Switch nach einem der vorhergehenden Ansprüche, der ferner Folgendes umfasst:
einen ersten Halbleiterschalter (115), der zum Abschalten des elektrischen Ausgangssignals angeordnet ist.

4. Netzwerk-Switch nach dem vorhergehenden Anspruch, der ferner Folgendes umfasst:
eine Primärspule (117), die mit einem ersten internen Ausgangsanschluss (107) und einem zweiten internen Ausgangsanschluss (109) verbindbar ist,
eine Sekundärspule (121), die mit dem ersten Ausgangsanschluss (123) und dem zweiten Ausgangsanschluss (125) verbunden ist, wobei die Primärspule (117) mit dem ersten internen Ausgangsanschluss (107) und dem zweiten internen Ausgangsanschluss (109) verbunden ist, wenn das elektrische Ausgangssignal aktiviert ist.

5. Netzwerk-Switch nach dem vorhergehenden Anspruch, bei dem der erste Halbleiterschalter (107), wenn das elektrische Ausgangssignal abgeschaltet ist, insbesondere über einen Widerstand (135) den ersten internen Ausgangsanschluss (107) und den zweiten internen Ausgangsanschluss (109) elektrisch so verbindet, dass in der Primärspule (117) kein Strom fließt.

6. Netzwerk-Switch nach Anspruch 4 oder 5, der ferner Folgendes umfasst:
einen zweiten Halbleiterschalter (119) und
einen Widerstand (135) zwischen dem ersten Halbleiterschalter (115) und dem zweiten Halbleiterschalter (119),
wobei, wenn das elektrische Ausgangssignal abgeschaltet ist: der erste Halbleiterschalter (115)
einen ersten Anschluss des Widerstands (135) mit dem ersten internen Ausgangsanschluss (107) verbindet und
insbesondere einen ersten Anschluss der Primärspule (117) von dem ersten internen Ausgangsanschluss (107) trennt und der zweite Halbleiterschalter (119)
einen zweiten Anschluss des Widerstands (135) mit dem zweiten internen Ausgangsanschluss (109) verbindet und
insbesondere einen zweiten Anschluss der Primärspule (117) von dem zweiten internen Ausgangsanschluss (109) trennt.

7. Netzwerk-Switch nach einem der vorhergehenden Ansprüche, der ferner Folgendes umfasst:
eine Steuerung (141), die so konfiguriert ist, dass sie das Abschalten des elektrischen Ausgangssignals insbesondere auf der Grundlage eines empfangenen Steuersignals steuert (137, 139).

8. Netzwerk-Switch nach dem vorhergehenden Anspruch bei Bezugnahme auf einen der Ansprüche 3 bis 6, bei dem die Steuerung so konfiguriert ist, dass sie
einen Leitfähigkeitszustand des ersten Halbleiterschalters (115) oder
einen Leitfähigkeitszustand des ersten Halbleiterschalters (115) und des zweiten Halbleiterschalters (119) steuert.

9. Netzwerk-Switch nach einem der vorhergehenden Ansprüche, bei dem jeder Port (103, 105) ein erster elektrischer Eingangsanschluss (131) und ein zweiter elektrischer Eingangsanschluss (133) zum Empfangen eines elektrischen Eingangssignals zwischen dem ersten und dem zweiten elektrischen Eingangsanschluss aufweist,
wobei der Port (103, 105) insbesondere so konfiguriert ist, dass er gezielt eine elektrische Spannung zwischen dem ersten und dem zweiten elektrischen Eingangsanschluss aufhebt.

10. Netzwerk-Switch nach einem der vorhergehenden Ansprüche, der als Ethernet- oder als Profinet-Switch konfiguriert ist, wobei die Ports insbesondere als Buchsen ausgelegt sind.

11. Netzwerk-Switch nach einem der vorhergehenden Ansprüche, der für eine unterseeische Anwendung konfiguriert ist.

12. Unterseeisches Netzwerksystem, das einen Netzwerk-Switch nach einem der vorhergehenden Ansprüche, der als unterseeischer Netzwerk-Switch konfiguriert ist, und ferner einen unterseeischen Netzwerkknoten umfasst, der mit einem des mindestens einen schaltbaren Kommunikationsports (103) des unterseeischen Netzwerk-Switchs verbunden ist, wobei sich der unterseeische Netzwerk-Switch so steuern lässt, dass er das elektrische Ausgangssignal des verbundenen Kommunikationsports abschaltet und so das Trennen des unterseeischen Netzwerkknotens ermöglicht, selbst wenn sowohl der unterseeische Netzwerk-Switch als auch der unterseeische Netzwerkknoten unterseeisch installiert sind.

13. Verfahren zum Betreiben eines Kommunikationsnetzwerks, insbesondere in Meereswasser zwischen 1000 m und 4000 m unterhalb der Meeresoberfläche, wobei das Verfahren Folgendes umfasst:
Benutzen eines Netzwerk-Switchs (100) mit mehreren Kommunikationsports (103, 105), von denen jeder einen ersten elektrischen Ausgangsanschluss (123) und einen zweiten elektrischen Ausgangsanschluss (125) zum Bereitstellen eines elektrischen Ausgangssignals zwischen dem ersten und dem zweiten elektrischen Ausgangsanschluss aufweist,
elektrisches Abschalten des elektrischen Ausgangssignals mindestens eines Kommunikationsports (103) der mehreren Kommunikationsports (103, 105) durch den Netzwerk-Switch,
**dadurch gekennzeichnet, dass** der Netzwerk-Switch so ausgelegt ist, dass der erste elektrische Ausgangsanschluss (123) des mindestens einen Kommunikationsports das gleiche elektrische Potential aufweist wie der zweite elektrische Ausgangsanschluss (125) des mindestens einen Kommunikationsports, wenn das elektrische Ausgangssignal des mindestens einen Kommunikationsports (103) abgeschaltet ist.

14. Verfahren zum Ersetzen einer mit einem Port eines Netzwerk-Switchs verbundenen ersten Kommunikationseinrichtung durch eine zweite Kommunikationseinrichtung, das Folgendes umfasst:
Ausführen eines Verfahrens zum Betreiben eines Kommunikationsnetzwerks nach dem vorhergehenden Anspruch 13,
Trennen der ersten Kommunikationseinrichtung von dem Port, an dem das Ausgangssignal abgeschaltet wurde,
Inkontaktbringen des Ports mit Meereswasser,
Verbinden der zweiten Kommunikationseinrichtung mit dem Port und
Aktivieren des Ausgangssignals am Port.

## Revendications

1. Un commutateur de réseau (100) comprenant :
une pluralité de ports de communication (103, 105), chaque port possédant une première borne de sortie électrique (123) et une deuxième borne de sortie électrique (125) destinées à la fourniture d'un signal de sortie électrique entre la première borne de sortie électrique et la deuxième borne de sortie électrique,
dans lequel le commutateur de réseau est adapté de façon à désactiver électriquement le signal de sortie électrique d'au moins un port de communication (103) de la pluralité de ports de communication,
**caractérisé en ce que** le commutateur de réseau est adapté de sorte que la première borne de sortie électrique (123) du au moins un port de communication possède un même potentiel électrique que la deuxième borne de sortie électrique (125) du au moins un port de communication lorsque le signal de sortie électrique du au moins un port de communication (103) est désactivé.

2. Le commutateur de réseau selon la revendication 1, dans lequel le potentiel électrique est un potentiel de masse.

3. Le commutateur de réseau selon l'une quelconque des revendications précédentes, comprenant en outre :
un premier commutateur à semiconducteurs (115) agencé de façon à désactiver le signal de sortie électrique.

4. Le commutateur de réseau selon la revendication précédente, comprenant en outre :
une bobine primaire (117) pouvant être raccordée à une première borne de sortie interne (107) et à une deuxième borne de sortie interne (109),
une bobine secondaire (121) raccordée à la première borne de sortie (123) et à la deuxième borne de sortie (125), la bobine primaire (117) étant raccordée à la première borne de sortie interne (107) et à la deuxième borne de sortie interne (109), lorsque le signal de sortie électrique est activé.

5. Le commutateur de réseau selon la revendication précédente, dans lequel, lorsque le signal de sortie électrique est désactivé, le premier commutateur à semiconducteurs (107) raccorde électriquement, plus particulièrement par l'intermédiaire d'une résistance (135), la première borne de sortie interne (107) et la deuxième borne de sortie interne (109) de sorte qu'aucun courant électrique ne circule dans la bobine primaire (117).

6. Le commutateur de réseau selon l'une quelconque des revendications 4 ou 5, comprenant en outre :
un deuxième commutateur à semiconducteurs (119), et
une résistance (135) entre le premier commutateur à semiconducteurs (115) et le deuxième commutateur à semiconducteurs (119),
dans lequel, lorsque le signal de sortie électrique est désactivé : le premier commutateur à semiconducteurs (115)
raccorde une première borne de la résistance (135) à la première borne de sortie interne (107) et
plus particulièrement déconnecte une première borne de la bobine primaire (117) de la première borne de sortie interne (107), et
le deuxième commutateur à semiconducteurs (119)
raccorde une deuxième borne de la résistance (135) à la deuxième borne de sortie interne (109) et
plus particulièrement déconnecte une deuxième borne de la bobine primaire (117) de la deuxième borne de sortie interne (109).

7. Le commutateur de réseau selon l'une quelconque des revendications précédentes, comprenant en outre :
un dispositif de commande (141) configuré de façon à commander (137, 139) la désactivation du signal de sortie électrique, plus particulièrement en fonction d'un signal de commande reçu.

8. Le commutateur de réseau selon la revendication précédente lorsqu'elle fait référence à l'une des revendications 3 à 6, dans lequel le dispositif de commande est configuré de façon à commander
un état de conductance du premier commutateur à semiconducteurs (115) ou
un état de conductance du premier commutateur à semiconducteurs (115) et du deuxième commutateur à semiconducteurs (119).

9. Le commutateur de réseau selon l'une quelconque des revendications précédentes, dans lequel chaque port (103, 105) possède une première borne d'entrée électrique (131) et une deuxième borne d'entrée électrique (133) destinées à la réception d'un signal d'entrée électrique entre la première borne d'entrée électrique et la deuxième borne d'entrée électrique,
dans lequel le port (103, 105) est plus particulièrement configuré de façon à supprimer de manière sélective une tension électrique entre la première borne d'entrée électrique et la deuxième borne d'entrée électrique.

10. Le commutateur de réseau selon l'une quelconque des revendications précédentes, configuré sous la forme d'un commutateur Ethernet ou d'un commutateur Profinet, dans lequel les ports sont plus particulièrement adaptés en tant que connecteurs.

11. Le commutateur de réseau selon l'une quelconque des revendications précédentes, configuré pour une application sous-marine.

12. Un système de réseau sous-marin, comprenant un commutateur de réseau selon l'une quelconque des revendications précédentes configuré sous la forme d'un commutateur de réseau sous-marin et comprenant en outre un noeud de réseau sous-marin, le noeud de réseau sous-marin étant raccordé à l'un des au moins un ports de communication (103) commutables du commutateur de réseau sous-marin, le commutateur de réseau sous-marin pouvant être commandé de façon à désactiver le signal de sortie électrique du port de communication raccordé de façon à permettre la déconnexion du noeud de réseau sous-marin même si à la fois le commutateur de réseau sous-marin et le noeud de réseau sous-marin sont installés sous la mer.

13. Un procédé d'exploitation d'un réseau de communication, plus particulièrement dans de l'eau de mer entre 1000 m et 4000 m sous le niveau de la mer, le procédé comprenant :
l'utilisation d'un commutateur de réseau (100) possédant une pluralité de ports de communication (103, 105), chaque port possédant une première borne de sortie électrique (123) et une deuxième borne de sortie électrique (125) destinées à la fourniture d'un signal de sortie électrique entre la première borne de sortie électrique et la deuxième borne de sortie électrique,
la désactivation électrique, par le commutateur de réseau, du signal de sortie électrique d'au moins un port de communication (103) de la pluralité de ports de communication (103, 105),
**caractérisé en ce que** le commutateur de réseau est adapté de sorte que la première borne de sortie électrique (123) du au moins un port de communication possède un même potentiel électrique que la deuxième borne de sortie électrique (125) du au moins un port de communication lorsque le signal de sortie électrique du au moins un port de communication (103) est désactivé.

14. Un procédé de remplacement d'un premier dispositif de communication raccordé à un port d'un commutateur de réseau par un deuxième dispositif de communication, le procédé comprenant :
l'exécution d'un procédé d'exploitation d'un réseau de communication selon la revendication précédente 13,
la déconnexion du premier dispositif de communication du port sur lequel le signal de sortie a été désactivé,
l'exposition du port à l'eau de mer,
le raccordement du deuxième dispositif de communication au port, et
l'activation du signal de sortie au niveau du port.
